# EUROPÄISCHE PATENTSCHRIFT

(11) **EP 1 286 508 B1**
(45) Veröffentlichungstag und Bekanntmachung des Hinweises auf die Patenterteilung: **13.07.2005**
(21) Anmeldenummer: 01440267.1
(22) Anmeldetag: 17.08.2001
(51) Int. Cl.: H04L 12/64

(54) **Verfahren zur Übergabe eines Anrufs zwichen einem Telekommunikationsnetzwerk und einem Datennetzwerk**
Method to transmit a call between a telecommunication network and a data network
Procédé pour transmettre un appel d'un réseau de télécommunication à un réseau de données

(43) Veröffentlichungstag der Anmeldung: 26.02.2003
(73) Patentinhaber: ALCATEL, 75008 Paris (FR)
(72) Erfinder: Weik, Hartmut, Dipl.-Ing., 70195 Stuttgart (DE); Schmechel, Johannes, Dipl.-Ing., 75239 Eisingen (DE)
(74) Vertreter: Rausch, Gabriele, Dr.

(56) Entgegenhaltungen:
- EP-A- 0 581 087
- WO-A-01/05108
- US-A- 6 069 890

## Beschreibung

Die vorliegende Erfindung betrifft ein Verfahren zur Übergabe eines Anrufs zwischen einem Telekommunikationsnetzwerk und einem Datennetzwerk. Zwischen dem Datennetzwerk und dem Telekommunikationsnetzwerk ist ein Übergangsrechner angeordnet, durch den Sprachdaten des Anrufs von einem in dem Telekommunikationsnetzwerk verwendeten Format in ein in dem Datennetzwerk verwendetes Format und umgekehrt umgewandelt werden. Signalisierungsdaten des Anrufs werden von einer in dem Datennetzwerk angeordneten Datenverarbeitungsvorrichtung verarbeitet.

Außerdem betrifft die Erfindung eine Datenverarbeitungsvorrichtung eines Datennetzwerks, das über einen Übergangsrechner mit einem Telekommunikationsnetzwerk verbunden ist.

Schließlich betrifft die vorliegende Erfindung einen zwischen einem Telekommunikationsnetzwerk und einem Datennetzwerk angeordneten Übergangsrechner (sog. Gateway). Der Übergangsrechner weist Mittel zum Umwandeln von Sprachdaten eines Anrufs von einem in dem Telekommunikationsnetzwerk verwendeten Format in ein in dem Datennetzwerk verwendetes Format und umgekehrt auf.

Verfahren und Übergangsrechner der eingangs genannten Art sind aus dem Stand der Technik für Voice over IP (Internet Protocol)-Anwendungen bekannt. Ein Solches Verfahren und ein solcher Übergangsrechner sind aus Document WO 0 105 108 und US 606 9890 bekannt. Bei Voice over IP-Anwendungen werden Sprachdaten eines Anrufs sowohl über Telekommunikationsnetzwerke als auch über IP-basierte Datennetzwerke übertragen. Das Telekommunkationsnetzwerk ist bspw. als ein öffentliches Telefonnetzwerk (PSTN, Public Switched Telephone Network) ausgebildet. Das Datennetzwerk kann als ein LAN (Local Area Network), HFC (Hybrid Fibre Coax)-Netzwerk oder als ein WLL (Wireless Local Loop)-Netzwerk ausgebildet sein, über das Daten IP (Internet Protocol)-basiert übertragen werden können.

Für Voice over IP-Anwendungen sind Telekommunikationsendgeräte für Teilnehmer über einen oder mehrere Übergangsrechner (Gateways) an das Datennetzwerk angeschlossen. Die Telekommunikationsendgerate sind bspw. Telefone oder Personal Computer (PC), die über entsprechende Hard- und Software verfügen. Das Datennetzwerk ist über einen anderen Übergangsrechner (Gateway) an das Telekommunikationsnetzwerk angeschlossen. In dem Datennetzwerk ist eine Datenverarbeitungsvorrichtung angeordnet. Bei einem über das Telekommunikationsnetzwerk eingehenden Anruf werden die Signalisierungsdaten von dem Übergangsrechner in Befehle umgewandelt und die Befehle an die Datenverarbeitungsvorrichtung übermittelt. Die Datenverarbeitungsvorrichtung veranlasst den Aufbau einer Kommunikationsverbindung zu dem Teilnehmer, für den der Anruf bestimmt ist, über das IP-basierte Datennetzwerk. Nach dem Aufbau der Kommunikationsverbindung ist der Übergangsrechner zuständig für eine Umwandlung der Sprachdaten des Anrufs zwischen dem in dem Telekommunikationsnetzwerk genutzten Format (z.B. TDM, Time Division Multiplex) und dem in dem Datennetzwerk genutzten Format (IP, Internet Protocol).

Die von dem Übergangsrechner in die Befehle umgewandelten Signalisierungsdaten eines Anrufs werden über einen Signalisierungskanal, der bei ISDN bspw. als D-Kanal bezeichnet wird, übertragen. Die Signalisierungsdaten dienen zur Steuerung des Verbindungsaufbaus, zur Aufrechterhaltung der Verbindung und zum kontrollierten Verbindungsabbau. Die von dem Signalisierungskanal zur Verfügung gestellten Funktionalitäten können jedoch nur in dem Telekommunikationsnetzwerk voll ausgenutzt werden. Bei den aus dem Stand der Technik bekannten Voice over IP-Anwendungen können die Funktionalitäten eines Signalisierungskanals jedoch kaum ausgenutzt werden. Das hat seine Ursache insbesondere darin, dass die Signalisierungsdaten vor der Übermittlung an die Datenverarbeitungsvorrichtung von dem Übergangsrechner in entprechende Befehle umgewandelt werden. Außerdem ergibt sich bei den aus dem Stand der Technik bekannten Übergangsrechnern ein erheblicher Implementierungsaufwand für die Umwandlung der Signalisierungsdaten in die Befehle.

Der vorliegenden Erfindung liegt deshalb die Aufgabe zugrunde, eine einfache Möglichkeit zu schaffen, die in Telekommunikationsnetzwerken zur Verfügung stehenden Funktionalitäten eines Signalisierungskanals auch bei Sprachverbindungen, die teilweise über Datennetzwerke erfolgen, voll ausnutzen zu können.

Zur Lösung dieser Aufgabe schlägt die vorliegende Erfindung ausgehend von dem Verfahren zur Übergabe eines Anrufs der eingangs genannten Art vor, dass die Signalisierungsdaten bit-transparent von dem Übergangsrechner an die Datenverarbeitungsvorrichtung übertragen werden und von dieser in entsprechende Ansteuerbefehle für den Übergangsrechner umgewandelt und die Ansteuerbefehle an den Übergangsrechner zur Steuerung des Verbindungsabschnitts in dem Datennetzwerk übertragen werden bzw. in umgekehrter Richtung Ansteuerbefehle von dem Übergangsrechner an die Datenverarbeitungsvorrichtung übertragen, von dieser in entsprechende Signalisierungsdaten umgewandelt und die Signalisierungsdaten bit-transparent an den Übergangsrechner zur Weiterleitung an das Telekommunikationsnetzwerk übertragen werden.

Die Daten in dem Datennetzwerk werden vorzugsweise über das Internet Protocol (IP) übertragen. Bei dem erfindungsgemäßen Verfahren kann die volle Funktionalität der Signalisierungsdaten eines Anrufs ausgenutzt werden. Dazu werden die Signalisierungsdaten des Anrufs bit-transparent zwischen dem Übergangsrechner und der Datenverarbeitungsvorrichtung übertragen. Bei einer bit-transparenten Datenübertragung wird im Gegensatz zu einer befehls-, nachrichten oder paketorientierten Datenübertragung Bit für Bit übertragen. Bei Anwendung des erfindungsgemäßen Verfahrens muss außerdem lediglich die Datenverarbeitungsvorrichtung an die von dem Übergangsrechner verwendeten Formate oder Protokolle angepaßt werden, während der Übergangsrechner selbst nicht angepaßt werden muss. Die Übergangsrechner lassen sich deshalb auf besonders einfache Weise implementieren.

Die Datenverarbeitungsvorrichtung wandelt empfangene Signalisierungdaten in entsprechende Ansteuerbefehle für den Übergangsrechner um, der zwischen dem Telekommunikationsnetzwerk und dem Datennetzwerk angeordnet ist. Die Ansteuerbefehle werden an den Übergangsrechner übertragen und von diesem zur Steuerung des Verbindungsabschnitts in dem Datennetzwerk ausgeführt.

In umgekehrter Richtung werden Ansteuerbefehle von dem Übergangsrechner an die Datenverarbeitungsvorrichtung übertragen und von dieser in entsprechende Signalisierungsdaten umgewandelt. Die Signalisierungsdaten werden bit-transparent an den Übergangsrechner zur Weiterleitung an das Telekommunikationsnetzwerk übermittelt.

Die Datenverarbeitungseinrichtung ist als ein Server ausgebildet, der an das Datennetzwerk angeschlossen ist. Die Datenverarbeitungseinrichtung hat die Aufgabe, die Signalisierungsdaten eines Anrufs, die über ein erstes Protokoll von dem Übergangsrechner bit-transparent an die Datenverarbeitungsvorrichtung übertragen werden, in entsprechende Ansteuerbefehle umzuwandeln, die über ein zweites Protokoll an den Übergangsrechner oder den weiteren Übergangsrechner übertragen und dort zur Steuerung des Verbindungsabschnitts ausgeführt werden. Das erste Protokoll arbeitet bspw. nach dem V5.2-Standard (überwiegend in Europa) oder nach dem GR303-Standard (überwiegend in den USA). Das zweite Protokoll ist bspw. als MGCP oder als SIP ausgebildet oder arbeitet nach dem H.323-Standard. Darüber hinaus sind aus dem Stand der Technik eine Vielzahl weiterer Protokolle bekannt, die als Protokolle eingesetzt werden können.

Gemäß einer vorteilhaften Weiterbildung der vorliegenden Erfindung wird vorgeschlagen, dass Statusinformationen über eine Netzelemente-Steuerschnittstelle des Übergangsrechners an die Datenverarbeitungsvorrichtung übertragen werden. Zu diesem Zweck ist zwischen dem Übergangsrechner und der Datenverarbeitungsvorrichtung eine Datenübertragungsverbindung vorgesehen, die bspw. als NMC (Network Management Console) ausgebildet ist. Über diese Datenübertragungsverbindung können bspw. Synchronisationsinformationen zu Wartungszwecken beeinflusst werden. Bei einem 2-Mbit-Übertragungssystem kann mittels der Datenübertragungsverbindung bspw. ein Kanal 0 einer PCM30-Schnittstelle beeinflusst werden. Es kann der aktuelle Zustand des Verbindungsaufbaus oder einer bestehenden Kommunikationsverbindung abgefragt oder beeinflusst werden.

Gemäß einer vorteilhaften Weiterbildung der vorliegenden Erfindung wird vorgeschlagen, dass die Signalisierungsdaten des Anrufs von der Datenverarbeitungsvorrichtung in entsprechende Ansteuerbefehle für einen weiteren Übergangsrechner umgewandelt werden, wobei der weitere Übergangsrechner zwichen dem Datennetzwerk und mindestens einem Telekommunikationsendgerät angeordnet ist, und die Ansteuerbefehle an den weiteren Übergangsrechner zur Steuerung des Verbindungsabschnitts in dem Datenneztwerk übertragen werden bzw. umgekehrt Ansteuerbefehle von dem weiteren Übergangsrechner an die Datenverarbeitungsvorrichtung übertragen, von dieser in entsprechende Signalisierungsdaten umgewandelt und die Signalisierungsdaten bit-transparent an den Übergangsrechner zur Weiterleitung an das Telekommunikationsnetzwerk übertragen werden. Über den weiteren Übergangsrechner sind Telekommunikationsendgeräte an das Datennetzwerk angeschlossen. Die Telekommunikationsendgeräte können als Telefone oder als Computer, insbesondere als Personal Computer, die mit einer entsprechenden Hardware und Software ausgestattet sind, ausgebildet sein. Gemäß dieser Weiterbildung werden die Signalisierungsdaten also einerseits in Ansteuerbefehle für den Übergangsrechner zwischen dem Telekommunikationsnetzwerk und dem Datennetzwerk und andererseits aber auch in Ansteuerbefehle für den weiteren Übergangsrechner umgewandelt. Der Übergangsrechner und der weitere Übergangsrechner führen die Ansteuerbefehle zur Steuerung des Verbindungsabschnitts in dem Datennetzwerk aus.

Es wird vorgeschlagen, dass die Ansteuerbefehle für den Übergangsrechner oder den weiteren Übergangsrechner über eines der nachfolgenden Protokolle übertragen werden: MGCP (Media Gateway Control Protocol), SIP (Session Initiation Protocol) oder ein Protokoll nach dem H.323-Standard. Vorzugsweise werden die Ansteuerbefehle über das Datennetzwerk an den Übergangsrechner oder den weiteren Übergangsrechner übertragen.

Als eine weitere Lösung der Aufgabe der vorliegenden Erfindung wird ausgehend von der Datenverarbeitungsvorrichtung eines Datennetzwerks der eingangs genannten Art vorgeschlagen, dass die Datenverarbeitungsvorrichtung Mittel zum Empfangen von bit-transparent übertragenen Signalisierungsdaten eines über das Telekommunikationsnetzwerk ankommenden Anrufs, Mittel zum Umwandeln der Signalisierungsdaten in entsprechende Ansteuerbefehle für den Übergangsrechner und Mittel zum Übertragen der Ansteuerbefehle an den Übergangsrechner zur Steuerung des Verbindungsabschnitts in dem Datennetzwerk aufweist. Zur bit-transparenten Datenübertragung in die umgekehrte Richtung weist die Datenverarbeitungsvorrichtung Mittel zum Empfangen von Ansteuerbefehlen von dem Übergangsrechner, Mittel zum Umwandeln der Ansteuerbefehle in entsprechende Signalisierungsdaten und Mittel zum bit-transparenten Übertragen der Signalisierungsdaten an den Übergangsrechner zum Weiterleiten an das Telekommunikationsnetzwerk auf.

Selbstverständlich kann die Datenverarbeitungsvorrichtung nicht nur Signalisierungsdaten in entsprechende Ansteuerbefehle, sondern umgekehrt auch Ansteuerbefehle in entsprechende Signalisierungsdaten umwandeln, die an den Übergangsrechner übertragen und zur Steuerung des Verbindungsabschnitts in dem Telekommunikationsnetzwerk an eine Vermittlungsstelle in dem Telekommunikationsnetzwerk weitergeleitet und dort ausgeführt werden.

Gemäß einer vorteilhaften Weiterbildung der vorliegenden Erfindung wird vorgeschlagen, dass die Datenverarbeitungsvorrichtung Mittel zum Umwandeln der Signalisierungsdaten in entsprechende Ansteuerbefehle für einen weiteren Übergangsrechner, der zwischen dem Datennetzwerk und mindestens einem Telekommunikationsendgerät angeordnet ist, und Mittel zum Übertragen der Ansteuerbefehle an den weiteren Übergangsrechner zur Steuerung des Verbindungsabschnitts in dem Datennetzwerk bzw. Mittel zum Übertragen von Ansteuerbefehlen von dem weiteren Übergangsrechner an die Datenverarbeitungsvorrichtung, Mittel zum Umwandeln der Ansteuerbefehle in entsprechende Signalisierungsdaten und Mittel zum bit-transparenten Übertragen der Signalisierungsdaten an den Übergangsrechner zur Weiterleitung an das Telekommunikationsnetzwerk aufweist.

Gemäß einer bevorzugten Ausführungsform der vorliegenden Erfindung wird vorgeschlagen, dass die Datenverarbeitungsvorrichtung Mittel zur Durchführung des erfindungsgemäßen Verfahrens aufweist.

Als noch eine weitere Lösung der Aufgabe der vorliegenden Erfindung wird ausgehend von dem zwischen einem Telekommunikationsnetzwerk und einem Datennetzwerk angeordneten Übergangsrechner der eingangs genannten Art vorgeschlagen, dass der Übergangsrechner Mittel zum bit-transparenten Übertragen von Signalisierungsdaten des Anrufs an eine Datenverarbeitungsvorrichtung des Datennetzwerks, Mittel zum Empfangen von den Signalisierungsdaten entsprechenden Ansteuerbefehlen von der Datenverarbeitungsvorrichtung und Mittel zum Ausführen der Ansteuerbefehle zur Steuerung des Verbindungsabschnitts in dem Datennetzwerk aufweist. Für die bit-transparente Datenübertragung in umgekehrter Richtung weist der Übergangsrechner Mittel zum Übertragen von Ansteuerbefehlen an die Datenverarbeitungsvorrichtung, Mittel zum Empfangen von bit-transparent übertragenen, den Ansteuerbefehlen entsprechenden Signalisierungsdaten und Mittel zum Weiterleiten der Signalisierungsdaten an das Telekommunikationsnetzwerk auf.

Gemäß einer vorteilhaften Weiterbildung der vorliegenden Erfindung wird vorgeschlagen, dass der Übergangsrechner Mittel zum Komprimieren und/oder Dekomprimieren der Signalisierungsdaten aufweist. In der Datenverarbeitungsvorrichtung sind entsprechende Mittel zum Dekomprimieren bzw. Komprimieren der Signalisierungsdaten vorhanden.

Gemäß einer bevorzugten Ausführungsform der vorliegenden Erfindung wird vorgeschlagen, dass der Übergangsrechner Mittel zum Übertragen von Statusinformationen über eine Netzelemente-Steuerschnittstelle des Übergangsrechners an die Datenverarbeitungsvorrichtung aufweist. Als Mittel zum Übertragen der Statusinformationen kann bspw. eine Datenübertragungsverbindung vorgesehen werden, die als eine NMC (Network Management Console) ausgebildet ist.

Gemäß einer weiteren bevorzugten Ausführungsform der vorliegenden Erfindung wird vorgeschlagen, dass der Übergangsrechner über eine E1-Schnittstelle mit einem V5.2-Kommunikationskanal mit dem Telekommunikationsnetzwerk verbunden ist. Alternativ wird vorgeschlagen, dass der Übergangsrechner über eine E1-Schnittstelle mit einem D-Kommunikationskanal mit dem Telekommunikationsnetzwerk verbunden ist. Vorteilhafterweise weist der Übergangsrechner Mittel zur Durchführung des erfindungsgemäßen Verfahrens auf.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: eine Netzwerkstruktur zur Ausführung eines erfindungsgemäßen Verfahrens gemäß einer bevorzugten Ausführungsform; und
- Figur 2: eine erfindungsgemäße Datenverarbeitungsvorrichtung gemäß einer bevorzugten Ausführungsform mit ihren Verbindungen zu den übrigen Komponenten der Netzwerkstruktur aus Fig. 1.

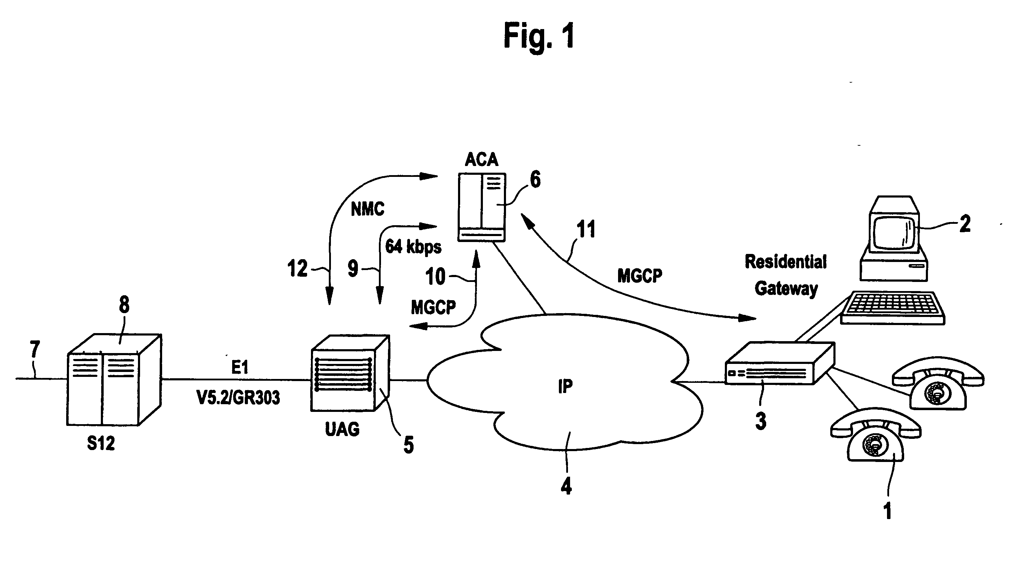

In Fig. 1 sind mehrere Telekommunikationsendgeräte dargestellt, die bspw. als Telefone 1 oder als ein Personal Computer (PC) 2 ausgebildet sind. Die Telekommunikationsendgeräte 1, 2 sind über einen Übergangsrechner (Residential Gateway) 3, an ein IP (Internet Protocol)-basiertes Datennetzwerk 4 angeschlossen. Außerdem ist an das Datennetzwerk 4 ein Übergangsrechner (UAG, Universal Access Gateway) 5 und eine Datenverarbeitungsvorrichtung (ACA, Access Call Agent) 6 angeschlossen.

Der Übergangsrechner 5 ist außerdem an eine mit S12 bezeichnete Vermittlungsstelle 8 angeschlossen, die Teil eines Telekommunikationsnetzwerks 7 ist. Das Telekommunikationsnetzwerk 7 ist bspw. als ein öffentliches Telefonnetzwerk (PSTN, Public Switched Telephone Network) ausgebildet. Die Vermittlungsstelle 8 ist über eine E1-Schnittstelle mit einem V5.2-Kommunikationskanal mit dem Übergangsrechner 5 verbunden. Alternativ kann die Vermittlungsstelle 8 auch über eine E1-Schnittstelle mit einem GR303-Kommunikationskanal mit dem Übergangsrechner 5 in Verbindung stehen.

Das IP-basierte Datennetzwerk 4 kann als ein Local Area Network (LAN), als ein Hybrid Fibre Coax (HFC)-Netzwerk oder als ein Wireless Local Loop (WLL)-Netzwerk ausgebildet sein. All diese Netzwerke stellen eine Datenverbindung zur Verfügung, über die Sprachsignale übertragen werden können.

In dem Übergangsrechner 3 werden Protokolle wie z. B. SIP (Session Initiation Protocol) oder MGCP (Media Gateway Control Protocol) oder ein Protokoll nach dem H.323-Standard oder ähnliche eingesetzt.

Mit Hilfe der in Fig. 1 dargestellten Netzwerkstruktur können Voice over IP (Internet Protocol)-Anwendungen realisiert werden. Dabei werden Sprachsignale eines Anrufs nicht nur über das Telekommunikationsnetzwerk 7, sondern auch über das IP-basierte Datennetzwerk 4 übertragen.

Um bei Voice over IP-Anwendungen möglichst viele Telefonie-Leistungsmerkmale nutzen zu können, die in einem reinen Telekommunikationsnetzwerk 7 über einen Signalisierungskanal zur Verfügung gestellt werden, wird das erfindungsgemäße Verfahren zur Übergabe eines Anrufs zwischen dem Telekommunikationsnetzwerk 7 und dem Datennetzwerk 4 vorgeschlagen. Die Telefonie-Leistungsmerkmale werden durch die Vermittlungsstelle 8 realsiert, die über die E1-Schnittstelle an den Übergangsrechner 5 angeschlossen ist.

Der wesentliche Teil des erfindungsgemäßen Verfahrens wird in der Datenverarbeitungsvorrichtung 6 ausgeführt. Die Datenverarbeitungsvorrichtung 6 schaltet bei einem von dem Telekommunikationsnetzwerk 7 her ankommenden Anruf eine Verbindung zu einem an dem Übergangsrechner 3 angeschlossenen Teilnehmerendgerät 1 oder 2 durch. Hierzu wertet die Datenverarbeitungsvorrichtung 6 den über den V5.2-Kommunikationskanal ankommenden Verbindungswunsch aus und gibt über das Media Gateway Control Protocol (MGCP) Ansteuerbefehle an den Übergangsrechner 5 und den Übergangsrechner 3 aus, um den Verbindungsabschnitt der Sprachverbindung, der über das IP-basierte Datennetzwerk 4 realisiert ist, zu steuern. Die Steuerung des Verbindungsabschnitts umfasst den Aufbau, das Aufrechterhalten und das Beenden einer Verbindung.

Die Signalisierungsdaten werden über einen 64-kbit/s-Datenverbindung 9 von dem Übergangsrechner 5 an die Datenverarbeitungsvorrichtung 6 übertragen. Die Ansteuerbefehle werden über eine Verbindung 10 von der Datenverarbeitungsvorrichtung 6 an den Übergangsrechner 5 und über eine Verbindung 11 an den Übergangsrechner 3 übertragen. Die Verbindungen 10, 11 sind bspw. über das IP-basierte Datennetzwerk 4 realisiert. Außerdem generiert die Datenverarbeitungsvorrichtung 6 einen V5.2 64-kbit/s-Datenstrom zur Ansteuerung der Vermittlungsstelle 8, der über den Übergangsrechner 5 an die Vermittlungsstelle 8 übertragen wird.

Gleichzeitig empfängt und sendet die Datenverarbeitungsvorrichtung 6 über eine weitere Verbindung 12 Statusinformationen über eine Netzelemente-Steuerschnittstelle des Übergangsrechners 5, um auch in einem Kanal 0 der entsprechenden V5.2-Schnittstellen dem geforderten V5.2-Standard entsprechende Kennungen (sog. Flags) zu setzen oder auswerten zu können. Von der Vermittlungsstelle 8 aus gesehen, sieht das Datennetzwerk 4 wie ein herkömmliches Access-Netzwerk aus, das über eine V5.2- oder eine GR303-Schnittstelle verfügt.

In der Datenverarbeitungsvorrichtung 6 ist eine Zuordnungsliste vorgesehen, in der Rufnummern von Teilnehmern und entsprechende IP-Adressen abgelegt sind, unter denen die Teilnehmer bzw. die entsprechenden Telekommunikationsendgeräte 1, 2 erreichbar sind.

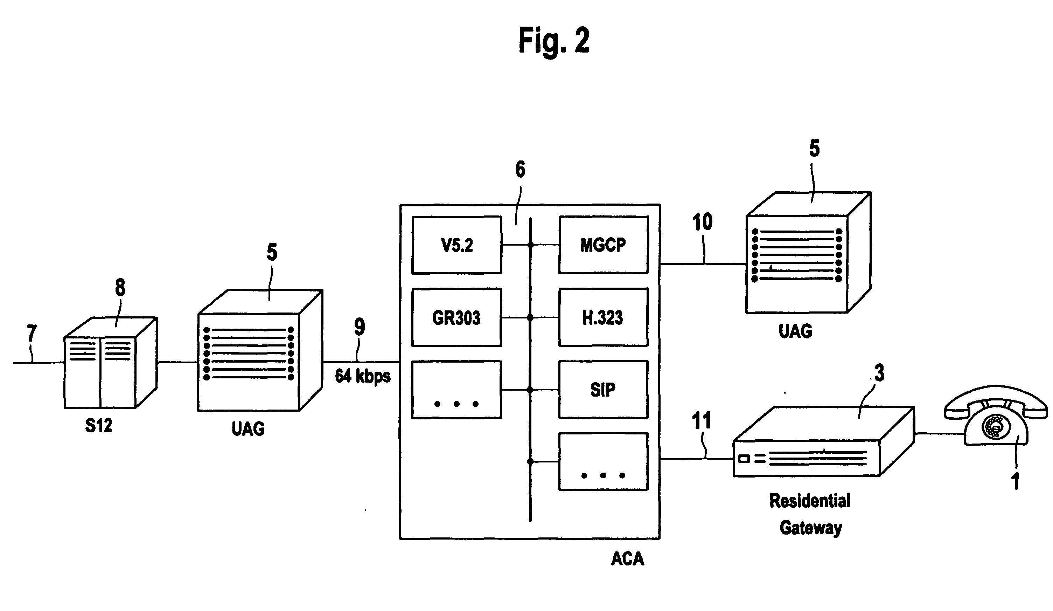

Anhand der Fig. 2 wird noch einmal die Funktion der Datenverarbeitungsvorrichtung 6 verdeutlicht. Wenn ein Anruf aus dem Telekommunikationsnetzwerk 7 an das Datennetzwerk 4 übergeben werden soll, ist die Datenverarbeitungsvorrichtung 6 verantwortlich für die Steuerung des Verbindungsabschnitts einschließlich dem Aufbau einer Verbindung über das IP-basierte Datennetzwerk 4. Das wird dadurch erreicht, dass die Signalisierungsdaten eines Anrufs in entsprechende Ansteuerbefehle umgewandelt werden und mittels eines beliebigen Protokolls (MGCP, SIP, Protokoll nach dem H.323-Standard o. ä) an die Übergangsrechner 3, 5 übertragen werden. Wenn ein Anruf aus dem Datennetzwerk 4 an das Telekommunikationsnetzwerk 7 übergeben werden soll, ist die Datenverarbeitungsvorrichtung 6 verantwortlich für die Steuerung des Verbindungsabschnitts einschließlich dem Aufbau einer Verbindung über das Telekommunikationsnetzwerk 7. Das wird dadurch erreicht, dass die Datenverarbeitungsvorrichtung 6 aus Befehlen von den Übergangsrechnern 3, 5 entsprechende Signalisierungsdaten erzeugt, die in einen Signalisierungskanal bspw. einer V5.2-Schnittstelle oder einer GR303-Schnittstelle geschrieben werden.

Zusätzlich verfügt die Datenverarbeitungsvorrichtung 6 über einen Zugang 12 zu der Netzwerksteuerung (sog. Network Element Management), um den IP-basierten Verbindungsabschnitt steuern zu können. Eine wesentliche Aufgabe der Datenverarbeitungsvorrichtung 6 ist es also, Signalisierungsdaten aus dem Telekommunikationsnetzwerk 7, die mittels eines ersten Protokolls (z.B. V5.2, GR303 o. ä.) an die Datenverarbeitungsvorrichtung 6 übertragen werden, in entsprechende Ansteuerbefehle umzuwandeln, die mittels eines zweiten Protokolls (MGCP, SIP, Protokoll nach dem H.323-Standard o. ä.) an die Übergangsrechner 3, 5 übertragen werden bzw. Ansteuerbefehle von den Übergangsrechnern 3, 5 in entsprechende Signalisierungsdaten umzuwandeln.

## Patentansprüche

1. Verfahren zur Übergabe eines Anrufs zwischen einem Telekommunikationsnetzwerk (7) und einem Datennetzwerk (4), wobei zwischen dem Datennetzwerk (4) und dem Telekommunikationsnetzwerk (7) ein Übergangsrechner (5) angeordnet ist, durch den Sprachdaten des Anrufs von einem in dem Telekommunikationsnetzwerk (7) verwendeten Format in ein in dem Datennetzwerk (4) verwendetes Format und umgekehrt umgewandelt werden, wobei Signalisierungsdaten des Anrufs von einer in dem Datennetzwerk (4) angeordneten Datenverarbeitungsvorrichtung (6) verarbeitet werden, **dadurch gekennzeichnet, dass** die Signalisierungsdaten bit-transparent von dem Übergangsrechner (5) an die Datenverarbeitungsvorrichtung (6) übertragen werden und von dieser in entsprechende Ansteuerbefehle für den Übergangsrechner (5) umgewandelt und die Ansteuerbefehle an den Übergangsrechner (5) zur Steuerung des Verbindungsabschnitts in dem Datennetzwerk (4) übertragen werden bzw. umgekehrt Ansteuerbefehle von dem Übergangsrechner (5) an die Datenverarbeitungsvorrichtung (6) übertragen, von dieser in entsprechende Signalisierungsdaten umgewandelt und die Signalisierungsdaten bit-transparent an den Übergangsrechner (5) zur Weiterleitung an das Telekommunikationsnetzwerk (7) übertragen werden.

2. Verfahren nach Anspruch 1, **dadurch gekennzeichnet, dass** Statusinformationen über eine Netzelemente-Steuerschnittstelle des Übergangsrechners (5) an die Datenverarbeitungsvorrichtung (6) übertragen werden.

3. Verfahren nach Anspruch 1, **dadurch gekennzeichnet, dass** die Signalisierungsdaten des Anrufs von der Datenverarbeitungsvorrichtung (6) in entsprechende Ansteuerbefehle für einen weiteren Übergangsrechner (3) umgewandelt werden, wobei der weitere Übergangsrechner (3) zwichen dem Datennetzwerk (4) und mindestens einem Telekommunikationsendgerät (1, 2) angeordnet ist, und die Ansteuerbefehle an den weiteren Übergangsrechner (3) zur Steuerung des Verbindungsabschnitts in dem Datenneztwerk (4) übertragen werden bzw. umgekehrt Ansteuerbefehle von dem weiteren Übergangsrechner (3) an die Datenverarbeitungsvorrichtung (6) übertragen, von dieser in entsprechende Signalisierungsdaten umgewandelt und die Signalisierungsdaten bit-transparent an den Übergangsrechner (5) zur Weiterleitung an das Telekommunikationsnetzwerk (7) übertragen werden.

4. Verfahren nach Anspruch 1, **dadurch gekennzeichnet, dass** die Daten in dem Datennetzwerk (4) über das Internet Protocol (IP) übertragen werden.

5. Datenverarbeitungsvorrichtung (6) eines Datennetzwerks (4), das über einen Übergangsrechner (5) mit einem Telekommunikationsnetzwerk (7) verbunden ist, **dadurch gekennzeichnet, dass** die Datenverarbeitungsvorrichtung (6) Mittel zum Empfangen von bit-transparent übertragenen Signalisierungsdaten eines über das Telekommunikationsnetzwerk (7) ankommenden Anrufs, Mittel zum Umwandeln der Signalisierungsdaten in entsprechende Ansteuerbefehle für den Übergangsrechner (5) und Mittel zum Übertragen der Ansteuerbefehle an den Übergangsrechner (5) zur Steuerung des Verbindungsabschnitts in dem Datennetzwerk (4) bzw. Mittel zum Empfangen von Ansteuerbefehlen von dem Übergangsrechner (5), Mittel zum Umwandeln der Ansteuerbefehle in entsprechende Signalisierungsdaten und Mittel zum bit-transparenten Übertragen der Signalisierungsdaten an den Übergangsrechner (5) zum Weiterleiten an das Telekommunikationsnetzwerk (7) aufweist.

6. Datenverarbeitungsvorrichtung (6) nach Anspruch 5, **dadurch gekennzeichnet, dass** die Datenverarbeitungsvorrichtung (6) Mittel zum Umwandeln der Signalisierungsdaten in entsprechende Ansteuerbefehle für einen weiteren Übergangsrechner (3), der zwischen dem Datennetzwerk (4) und mindestens einem Telekommunikationsendgerät (1, 2) angeordnet ist, und Mittel zum Übertragen der Ansteuerbefehle an den weiteren Übergangsrechner (3) zur Steuerung des Verbindungsabschnitts in dem Datennetzwerk (4) bzw. Mittel zum Übertragen von Ansteuerbefehlen von dem weiteren Übergangsrechner (3) an die Datenverarbeitungsvorrichtung (6), Mittel zum Umwandeln der Ansteuerbefehle in entsprechende Signalisierungsdaten und Mittel zum bit-transparenten Übertragen der Signalisierungsdaten an den Übergangsrechner (5) zur Weiterleitung an das Telekommunikationsnetzwerk (7) aufweist.

7. Datenverarbeitungsvorrichtung (6) nach Anspruch 5, **dadurch gekennzeichnet, dass** die Datenverarbeitungsvorrichtung (6) Mittel zum Komprimieren und/oder Dekomprimieren der Signalisierungsdaten aufweist.

8. Datenverarbeitungsvorrichtung (6) nach Anspruch 5, **dadurch gekennzeichnet, dass** die Datenverarbeitungsvorrichtung (6) Mittel zur Durchführung eines Verfahrens nach einem der Ansprüche 1 bis 4 aufweist.

9. Zwischen einem Telekommunikationsnetzwerk (7) und einem Datennetzwerk (4) angeordneter Übergangsrechner (5), der Mittel zum Umwandeln von Sprachdaten eines Anrufs von einem in dem Telekommunikationsnetzwerk (7) verwendeten Format in ein in dem Datennetzwerk (4) verwendetes Format und umgekehrt aufweist, **dadurch gekennzeichnet, dass** der Übergangsrechner (5) Mittel zum bit-transparenten Übertragen von Signalisierungsdaten des Anrufs an eine Datenverarbeitungsvorrichtung (6) des Datennetzwerks (4), Mittel zum Empfangen von den Signalisierungsdaten entsprechenden Ansteuerbefehlen von der Datenverarbeitungsvorrichtung (6) und Mittel zum Ausführen der Ansteuerbefehle zur Steuerung des Verbindungsabschnitts in dem Datennetzwerk (4) bzw. Mittel zum Übertragen von Ansteuerbefehlen an die Datenverarbeitungsvorrichtung (6), Mittel zum Empfangen von bit-transparent übertragenen, den Ansteuerbefehlen entsprechenden Signalisierungsdaten und Mittel zum Weiterleiten der Signalisierungsdaten an das Telekommunikationsnetzwerk (7) aufweist.

10. Übergangsrechner (5) nach Anspruch 9, **dadurch gekennzeichnet, dass** der Übergangsrechner (5) Mittel zum Komprimieren und/oder Dekomprimieren der Signalisierungsdaten aufweist.

11. Übergangsrechner (5) nach Anspruch 9, **dadurch gekennzeichnet, dass** der Übergangsrechner (5) Mittel (12) zum Übertragen von Statusinformationen über eine Netzelemente-Steuerschnittstelle des Übergangsrechners (5) an die Datenverarbeitungsvorrichtung (6) aufweist

12. Übergangsrechner (5) nach Anspruch 9, **dadurch gekennzeichnet, dass** der Übergangsrechner (5) über eine E1-Schnittstelle mit einem V5.2-Kommunikationskanal mit dem Telekommunikationsnetzwerk (7) verbunden ist.

13. Übergangsrechner (5) nach Anspruch 9, **dadurch gekennzeichnet, dass** der Übergangsrechner (5) über eine E1-Schnittstelle mit einem D-Kommunikationskanal mit dem Telekommunikationsnetzwerk (7) verbunden ist.

14. Übergangsrechner (5) nach Anspruch 9, **dadurch gekennzeichnet, dass** der Übergangsrechner (5) Mittel zur Durchführung eines Verfahrens nach einem der Ansprüche 1 bis 4 aufweist.

## Claims

1. Method for transferring a call between a telecommunications network (7) and a data network (4), a gateway (5) being arranged between the data network (4) and the telecommunications network (7), through which gateway voice data of the call is converted from a format used in the telecommunications network (7) into a format used in the data network (4) and conversely, signaling data of the call being processed by a data processing device (6) arranged in the data network (4), **characterized in that** the signaling data is transferred bit-transparently from the gateway (5) to the data processing device (6) and converted by this into corresponding control commands for the gateway (5) and the control commands are transferred to the gateway (5) for controlling the connection link in the data network (4), or conversely, control commands are transferred from the gateway (5) to the data processing device (6) and converted by this into corresponding signaling data, and the signaling data is transferred bit-transparently to the gateway (5) for forwarding to the telecommunications network (7).

2. Method as claimed in Claim 1, **characterized in that** status information is transferred over a network element control interface of the gateway (5) to the data processing device (6).

3. Method as claimed in Claim 1, **characterized in that** the signaling data of the call is converted by the data processing device (6) into corresponding control commands for a further gateway (3), the further gateway (3) being arranged between the data network (4) and at least one telecommunication terminal (1, 2), and the control commands being transferred to the further gateway (3) for controlling the connection link in the data network (4), or conversely control commands being transferred from the further gateway (3) to the data processing device (6) and converted by this into corresponding signaling data, and the signaling data being transferred bit-transparently to the gateway (5) for forwarding to the telecommunications network (7).

4. Method as claimed in Claim 1, **characterized in that** the data in the data network (4) is transferred with the Internet Protocol (IP).

5. Data processing device (6) of a data network (4), which is connected to a telecommunications network (7) through a gateway computer (5), **characterized in that** the data processing device (6) includes means for receiving bit-transparently transferred signaling data of a call incoming through the telecommunications network (7), means for converting the signaling data into corresponding control commands for the gateway (5) and means for transferring the control commands to the gateway (5) for controlling the connection link in the data network (4); or means for receiving control commands from the gateway (5), means for converting the control commands into corresponding signaling data and means for bit-transparent transfer of the signaling data to the gateway (5) for forwarding to the telecommunications network (7).

6. Data processing device (6) as claimed in Claim 5, **characterized in that** the data processing device (6) includes means for converting the signaling data into corresponding control commands for a further gateway (3), which is arranged between the data network (4) and at least one telecommunication terminal (1, 2), and means for transferring the control commands to the further gateway (3) for controlling the connection link in the data network (4), or means for transferring control commands from the further gateway (3) to the data processing device (6), means for converting the control commands into corresponding signaling data, and means for bit-transparent transfer of the signaling data to the gateway (5) for forwarding to the telecommunications network (7).

7. Data processing device (6) as claimed in Claim 5, **characterized in that** the data processing device (6) includes means for compressing and/or decompressing the signaling data.

8. Data processing device (6) as claimed in Claim 5, **characterized in that** the data processing device (6) includes means for carrying out a method as claimed in one of the claims 1 to 4.

9. Gateway (5) arranged between a telecommunications network (7) and a data network (4), including means for converting voice data of a call from a format used in the telecommunications network (7) into a format used in the data network (4), and conversely, **characterized in that** the gateway (5) includes means for bit-transparent transfer of signaling data of the call to a data processing device (6) of the data network (4), means for receiving control commands corresponding to the signaling data from the data processing device (6) and means for executing the control commands for controlling the connection link in the data network (4), or means for transferring control commands to the data processing device (6), means for receiving bit-transparently transferred signaling data corresponding to the control commands and means for forwarding the signaling data to the telecommunications network (7).

10. Gateway (5) as claimed in Claim 9, **characterized in that** the gateway (5) includes means for compressing and/or decompressing the signaling data.

11. Gateway (5) as claimed in Claim 9, **characterized in that** the gateway (5) includes means (12) for transferring status information across a network element control interface of the gateway (5) to the data processing device (6).

12. Gateway (5) as claimed in Claim 9, **characterized in that** the gateway (5) is connected over an E1 interface with a V5.2 communication channel with the telecommunications network (7).

13. Gateway (5) as claimed in Claim 9, **characterized in that** the gateway (5) is connected over an E1 interface with a D communication channel with the telecommunications network (7).

14. Gateway (5) as claimed in Claim 9, **characterized in that** the gateway (5) includes means for carrying out a method as claimed in one of the claims 1 to 4.

## Revendications

1. Procédé pour transmettre un appel entre un réseau de télécommunication (7) et un réseau de données (4), dans lequel entre le réseau de données (4) et le réseau de télécommunication (7), une passerelle (5) est disposée par laquelle les données vocales de l'appel sont converties d'un format utilisé dans le réseau de télécommunication (7) en un format utilisé dans le réseau de données (4), et vice versa, dans lequel les données de signalisation de l'appel sont traitées par un dispositif de traitement de données (6) disposé dans le réseau de données (4), **caractérisé en ce que** les données de signalisation sont transmises en transparence de bits de la passerelle (5) au dispositif de traitement de données (6) et sont converties par celui-ci en instructions de commande correspondantes pour la passerelle (5) et les instructions de commande sont transmises à la passerelle (5) pour commander la section de raccordement dans le réseau de données (4), ou inversement, que des instructions de commande sont transmises de la passerelle (5) au dispositif de traitement de données (6), converties par celui-ci en données de signalisation correspondantes et les données de signalisation sont transmises en transparence de bits à la passerelle (5) pour être transférées au réseau de télécommunication (7).

2. Procédé selon la revendication 1, **caractérisé en ce que** des informations d'état sont transmises au dispositif de traitement de données (6) par l'intermédiaire d'une interface de commande d'éléments de réseau de la passerelle (5).

3. Procédé selon la revendication 1, **caractérisé en ce que** les données de signalisation de l'appel sont converties par le dispositif de traitement de données (6) en instructions de commande correspondantes pour une passerelle supplémentaire (3), dans lequel la passerelle supplémentaire (3) est disposée entre le réseau de données (4) et au moins un terminal de télécommunication (1, 2), et les instructions de commande sont transmises à la passerelle supplémentaire (3) pour commander la section de raccordement dans le réseau de données (4), ou inversement, que des instructions de commande sont transmises par la passerelle supplémentaire (3) au dispositif de traitement de données (6), converties par celui-ci en données de signalisation correspondantes, et les données de signalisation sont transmises en transparence de bits à la passerelle (5) pour être transférées au réseau de télécommunication (7).

4. Procédé selon la revendication 1, **caractérisé en ce que** les données dans le réseau de données (4) sont transmises par l'intermédiaire du protocole internet (IP).

5. Dispositif de traitement de données (6) d'un réseau de données (4) qui est relié à un réseau de télécommunication (6) à travers une passerelle (5), **caractérisé en ce que** le dispositif de traitement de données (6) présente des moyens permettant de recevoir des données de signalisation transmises en transparence de bits d'un appel entrant à travers le réseau de télécommunication (7), des moyens permettant de convertir les données de signalisation en instructions de commande correspondantes pour la passerelle (5) et des moyens permettant de transmettre les instructions de commande à la passerelle (5) pour commander la section de raccordement dans le réseau de données (4) ou des moyens permettant de recevoir des instructions de commande provenant de la passerelle (5), des moyens permettant de convertir les instructions de commande en données de signalisation correspondantes et des moyens permettant de transmettre en transparence de bits les données de signalisation à la passerelle (5) pour les transférer au réseau de télécommunication (7).

6. Dispositif de traitement de données (6) selon la revendication 5, **caractérisé en ce que** le dispositif de traitement de données (6) présente des moyens permettant de convertir les données de signalisation en instructions de commande correspondantes pour une passerelle supplémentaire (3) qui est disposée entre le réseau de données (4) et au moins un terminal de télécommunication (1, 2), et des moyens permettant de transmettre les instructions de commande à la passerelle supplémentaire (3) pour commander la section de raccordement dans le réseau de données (4) ou des moyens pour transmettre des instructions de commande de la passerelle supplémentaire (3) au dispositif de traitement de données (6), des moyens permettant de convertir les instructions de commande en données de signalisation correspondantes et des moyens permettant de transmettre en transparence de bits les données de signalisation à la passerelle (5) pour les transférer au réseau de télécommunication (7).

7. Dispositif de traitement de données (6) selon la revendication 5, **caractérisé en ce que** le dispositif de traitement de données (6) présente des moyens permettant de comprimer et/ou de décomprimer les données de signalisation.

8. Dispositif de traitement de données (6) selon la revendication 5, **caractérisé en ce que** le dispositif de traitement de données (6) présente des moyens permettant de mettre en oeuvre un procédé selon l'une quelconque des revendications 1 à 4.

9. Passerelle (5) disposée entre un réseau de télécommunication (7) et un réseau de données (4), la passerelle présentant des moyens permettant de convertir les données vocales d'un appel d'un format utilisé dans le réseau de télécommunication (7) en un format utilisé dans le réseau de données (4), et vice versa, **caractérisé en ce que** la passerelle (5) présente des moyens permettant de transmettre en transparence de bits les données de signalisation de l'appel à un dispositif de traitement de données (6) du réseau de données (4), des moyens permettant de recevoir du dispositif de traitement de donnés (6) des instructions de commande correspondant aux données de signalisation et des moyens permettant d'exécuter les instructions de commande pour commander la section de raccordement dans le réseau de données (4), ou bien des moyens permettant de transmettre des instructions de commande au dispositif de traitement de données (6), des moyens permettant de recevoir des données de signalisation transmises en transparence de bits, correspondant aux instructions de commande, et des moyens permettant de transférer les données de signalisation au réseau de télécommunication (7).

10. Passerelle (5) selon la revendication 9, **caractérisée en ce que** la passerelle (5) présente des moyens permettant de comprimer et/ou de décomprimer les données de signalisation.

11. Passerelle (5) selon la revendication 9, **caractérisée en ce que** la passerelle (5) présente des moyens (12) permettant de transmettre au dispositif de traitement de données (6) des informations d'état par l'intermédiaire d'une interface de commande d'éléments de réseau de la passerelle (5).

12. Passerelle (5) selon la revendication 9, **caractérisée en ce que** la passerelle (5) est reliée au réseau de télécommunication (7) par l'intermédiaire d'une interface E1 avec un canal de communication V5.2.

13. Passerelle (5) selon la revendication 9, **caractérisée en ce que** la passerelle (5) est reliée au réseau de télécommunication (7) par l'intermédiaire d'une interface E1 avec un canal de communication D.

14. Passerelle (5) selon la revendication 9, **caractérisée en ce que** la passerelle (5) présente des moyens permettant de mettre en oeuvre un procédé selon l'une quelconque des revendications 1 à 4.
